Europäisches Patentamt

European Patent Office

Office européen des brevets

(11) Publication number: **0 209 311**
A2

# (12) EUROPEAN PATENT APPLICATION

(21) Application number: 86305266.8

(22) Date of filing: 08.07.86

(51) Int. Cl.⁴: **H 01 S · 3/03,** H 01 S 3/223, H 01 S 3/097

(30) Priority: 12.07.85 JP 152496/85
25.10.85 JP 163966/85 U
25.10.85 JP 163967/85 U

(43) Date of publication of application: 21.01.87
Bulletin 87/4

(84) Designated Contracting States: DE FR GB

(71) Applicant: Kabushiki Kaisha Toshiba, 72, Horikawa-cho Saiwai-ku, Kawasaki-shi Kanagawa-ken 210 (JP)

(72) Inventor: Kaneko, Eiji c/o Pat. Div. Toshiba Corp., 1-1 Shibaura 1-chome Minato-ku, Tokyo (JP)
Inventor: Yasuoka, Koichi c/o Pat. Div. Toshiba Corp., 1-1 Shibaura 1-chome Minato-ku, Tokyo (JP)
Inventor: Takahashi, Hideomi c/o Pat. Div. Toshiba Corp., 1-1 Shibaura 1-chome Minato-ku, Tokyo (JP)
Inventor: Yanabu, Satoru c/o Pat. Div. Toshiba Corp., 1-1 Shibaura 1-chome Minato-ku, Tokyo (JP)

(74) Representative: Shindler, Nigel et al, BATCHELLOR, KIRK & EYLES 2 Pear Tree Court Farringdon Road, London EC1R 0DS (GB)

(54) Gas laser apparatus.

(57) A gas laser apparatus which has a positive electrode and a negative electrode disposed along a gas flow direction, and a pair of resonance reflectors disposed in a direction that perpendicularly intersects the gas flow direction. The negative electrodes include an appropriate number of unit electrodes connected to a power source. The unit electrodes include a plurality of needle electrodes aligned in the gas flow direction, the respective needle electrodes of which are covered with insulators leaving pointed ends thereof uncovered, and the pointed ends are interconnected by conductive thin wires. The insulators prevent the glow discharge area of the respective needle electrodes from being increased. In addition, the conductive thin wires serve to cause adjacent needle electrodes to commence glow discharge, whereby stabilization of glow discharge can be achieved. The gas flow velocity may be decreased at the centre of the gas flow path to render the flow velocity more uniform across the gas flow path. For example, a rod structure may extend across the centre of the flow path or the needle electrodes at the centre of the flow path may be thicker than electrodes away from the flow path.

"Gas Laser Apparatus"

This invention relates to a gas laser apparatus such as a carbon-dioxide ($CO_2$) gas laser.

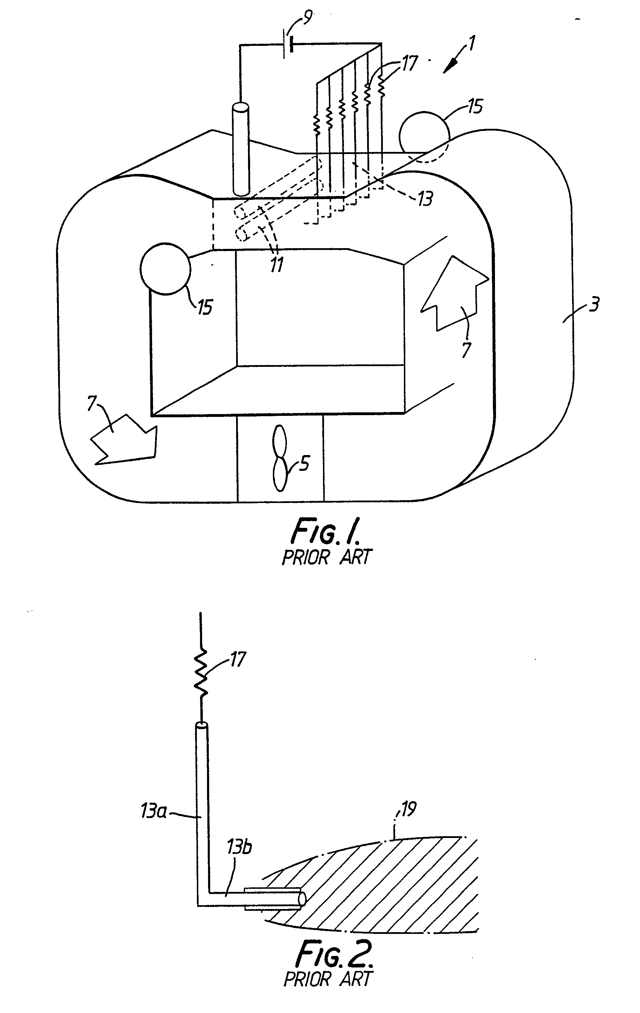

Figures 1 and 2 show an example of a conventional gas laser apparatus. In Figure 1, a gas laser apparatus 1 is provided with a ring wind tunnel or duct 3 in which active medium such as $CO_2$ gas is sealed. The gas is circulated by a fan 5 so as to establish a gas circulation flow 7. A positive electrode 11 and a negative electrode 13 which are connected to a power source 9 are disposed opposite to each other at the upper portion of the wind tunnel 3, and a pair of resonance reflectors 15 are disposed in a direction that perpendicularly intersects the gas flow direction. The negative electrode 13 includes a plurality of unit electrodes 13a. A ballast resistor 17 is connected between each unit electrode 13a and power source 9. The gas laser apparatus 1 generates specified glow discharge between the positive electrode 11 and the negative electrode 13 so as to cause the excitation of gas flow molecules, and produces a specified laser light output by virtue of the resonance function of the resonance reflectors 15. Figure 2 shows the generation status of glow 19 at one of unit electrodes 13a of negative electrode 13.

In the above-described conventional gas laser apparatus, unit electrode 13a includes a single pin electrode 13b, so that each resistor 17 limits the amount of current through a single unit electrode 13a. In order to obtain a large laser light output, a large number of pin electrodes 13b determined depending upon the output capacity of the apparatus, should be uniformly disposed in the space. In addition, there has been a disadvantage that when a large laser light output is required, the gas laser apparatus becomes inevitably complicated because the number of the pin electrodes, the number of the ballast resistors, and the amount of interconnection wiring for the ballast resistors must be increased.

The present invention seeks to provide a gas laser apparatus capable of producing a large laser light output.

Accordingly the present invention provides a gas laser apparatus, comprising:

first and second electrode assemblies;

means for inducing a flow of gas past said electrode assemblies;

means for creating an electric field between said first and second electrode assemblies so as to produce a glow discharge; and

means for producing a laser output from said glow discharge;

at least one of said first and second electrodes including a plurality of electrode units; characterised in that each of said electrode units includes:

a plurality of needle electrodes, each having an exposed portion and an insulated portion,

an interconnecting support member; and

means for electrically interconnecting said exposed portions of said needle electrodes.

Some embodiments of the invention will now be described by way of example with reference to the accompanying drawings, wherein:

Figure 1 is a schematic diagram illustrating a conventional gas laser apparatus;

Figure 2 is an explanatory diagram illustrating a pin electrode;

Figure 3 is a diagram illustrating a comb-shaped electrode unit according to a first embodiment of the present invention;

Figure 4 is a diagram illustrating a $CO_2$ gas laser apparatus according to the first embodiment of the present invention;

Figures 5 and 6 are diagrams illustrating other comb-shaped electrode units;

Figure 7 is a diagram illustrating a gas laser apparatus according to a second embodiment of the present device;

Figure 8 is a diagram illustrating an enlarged detail of the significant portion of the $CO_2$ gas laser apparatus shown in Figure 7;

Figures 9a and 9b are explanatory diagrams illustrating a gas flow rate distribution in the embodiment shown in Figure 4;

Figures 10a and 10b are explanatory diagrams illustrating a gas flow rate distribution in the embodiment shown in Figure 7;

Figures 11a, 11b, 12a and 12b are explanatory diagrams illustrating a gas flow rate distribution in other embodiments;

Figure 13 is a diagram illustrating a significant portion of yet another embodiment of the $CO_2$ gas laser apparatus; and

Figures 14a and 14b are diagrams illustrating a gas flow rate distribution in the embodiment shown in Figure 13.

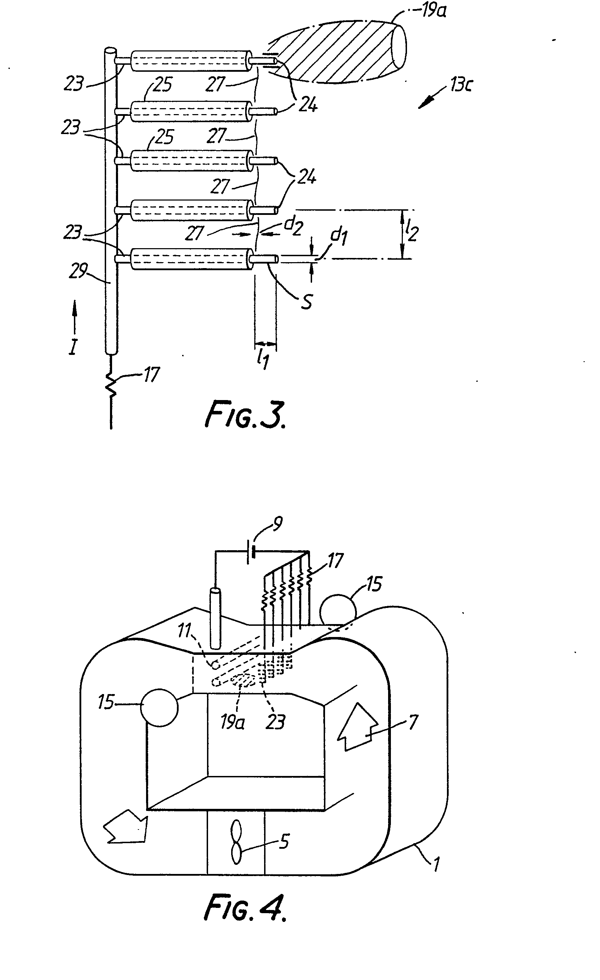

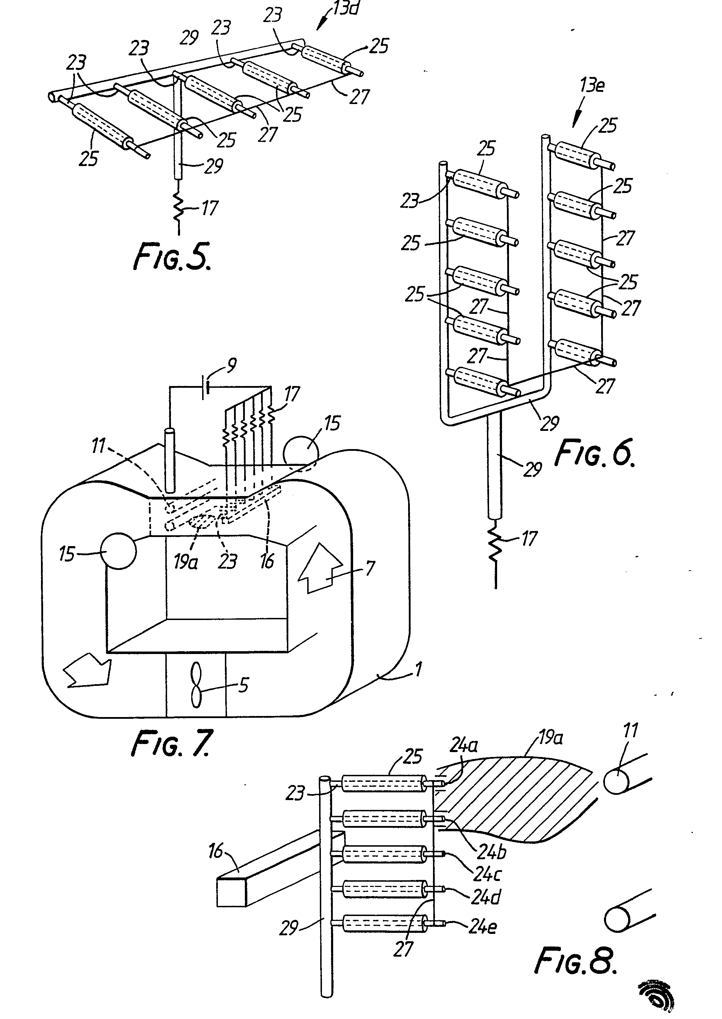

The embodiment of the invention shown in Figure 4 utilises a comb-shaped unit electrode 13c (Figure 3) in place of the conventional pin electrode 13b (Figure 2).

Electrode 13c is connected to a ballast resistor 17, and includes plural needle electrodes 23 which are combined through a connecting member 29 to form a comb-shape. Needle electrodes 23 carry insulators 25 which leave the pointed ends thereof uncovered. Pointed ends 24 are interconnected by conductive thin wires 27.

Insulators 25 prevent the excessive extension of glow discharge generated from pointed ends 24, and the material thereof is determined taking into consideration various characteristics such as insulating resistance, thermal stability, proof stress, and manufacturing readiness. However, Pyrex glass or ceramic tubes are preferred and have proved that they sufficiently meet such characteristics.

The diameter $d_1$ of each individual needle electrode 23 and the projecting length $l_1$ of pointed end 24 are determined such that the resulting surface area S is of the order of 100 to 200 $mm^2$ in the case of a gas laser apparatus using mixed gas of $CO_2$, $N_2$ and He, for example. However, in some cases, the surface area S may be in the range of 50 to 100 $mm^2$ or less when the distance $l_2$ between the needle electrodes 23 is required to be smaller. The surface area must be restricted to prevent a change from glow discharge to arc discharge.

The diameter $d_2$ of conductive thin wire 27 is determined, in relation to parallel striking function (described below), to be of the order of 1/10 of the diameter $d_1$ of needle electrode 23. In Figure 3, reference character I designates the current that flows through ballast resistor 17, and reference numeral 19a designates the glow radiating from needle electrode 23 toward positive electrode 11.

In operation, glow 19a is typically initiated at at least one of needle electrodes 23 of comb-shaped electrode 13c. Glow 19a extends to the pointed end 24 of that needle electrode 23, and is then transferred through conductive thin wire 27 to the adjacent needle electrode 23 so as to induce glow discharge thereat. These functions of parallel striking are in interactive relation, and there are provided coexistence effects of plural needle electrodes 23. Therefore, when glow discharge is generated at one of needle electrodes 23 of comb-shaped electrode 13c, the glow discharge is immediately transferred to the adjacent needle electrode 23, so that voltage fluctuations of the respective needle electrodes 23 are reduced, and as a whole, extremely stable glow discharge can be performed.

Further, the value of the current I that flows through ballast resistor 17 can be adjusted to a desired value by changing the number of needle electrodes. Thus the laser output can be increased by simply increasing the number of needle electrodes, so that there is no need to immoderately increase the number of unit electrodes in manufacturing a larger capacity gas laser apparatus. Moreover, the glow discharge quantity per unit electrode, i.e., the laser output, will be proportional to the number of needle electrodes 23 (assuming the electrodes are all identical).

Figure 5 shows another embodiment in which a comb-shaped electrode 13d comprises two connecting members 29 perpendicular to each other, and multiple needle electrodes 23 are disposed in a desired direction. Figure 6 shows still another embodiment in which a comb-shaped electrode 13e comprises multiple needle electrodes 23 arranged in two rows. As can be seen from these embodiments, comb-shaped electrodes can be formed in various different configurations.

By the use of the above-described comb-shaped electrodes 13c, 13d or 13e, stable glow discharge can be so assured so that a gas laser apparatus with a large output can be readily manufactured.

Figures 7 and 8 show another embodiment of the invention

based on the $CO_2$ gas laser apparatus with the configuration shown in Figure 4. A rod-shaped structure 16 is arranged so as to extend laterally across the gas flow path 7 at a position which is situated behind electrode connecting member 29 relative to the direction of gas flow.

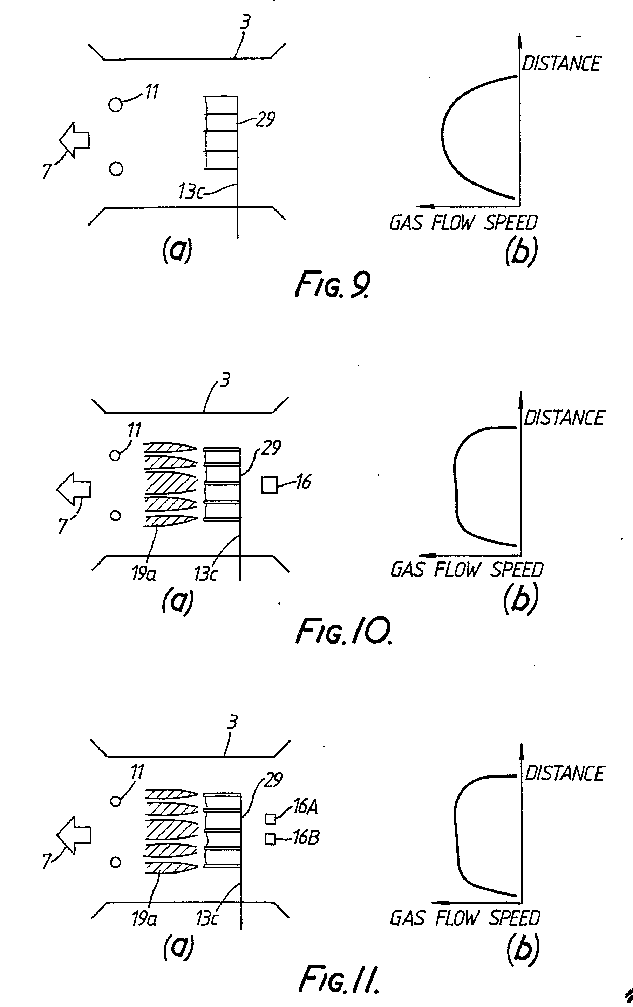

The structure 16 slows down the gas flow at the centre portion of the duct, so that the flow rate distribution of gas flow 7 observed in the axial direction of connecting member 29 changes from that shown in Figure 9b, for the arrangement of Figure 9a to become substantially flat as shown in Figure 10b for the arrangement of Figure 10a.

The striking conditions of the respective parallel needle electrodes 23 then become more closely similar, since the striking conditions depend on the velocity of gas flow past the electrode, so that equalising the velocity by slowing the flow rate at the centre of housing 3 tends to equalise the striking conditions. For example, assuming that after occurrence of glow discharge at an exposed portion 24a, the current value of the glow discharge increases gradually, the negative glow thereof migrates along the connection wire 27 so as to extend to an adjacent exposed portion 24b before the exposed portion 24a has become fully covered with the negative glow. The increase of the current value permits the negative glow to successively migrate to neighbouring exposed portions 24c, 24d and 24e, whereby a uniform glow can be generated over a wide range in the duct space. This allows the limit discharge current to be increased to about 1.5 to 2.0 times the regular value before glow discharge ceases on the electrode on which glow discharge had started.

In a $CO_2$ gas laser apparatus, laser oscillation is not initiated until a discharge current exceeds a certain value which is usually called a simmer current value. The method of operation of the laser apparatus is usually such that during standby, the charge current is maintained below the simmer current value, and when machining, i.e. when a laser light output is desired, the discharge current is raised to the value at which the necessary laser light output can be obtained. Therefore, even in the period of standby during which the discharge current is maintained below the simmer current value, all the rod-shaped electrodes are glow-struck so that when necessary, operations to produce laser light output of any level up to the maximum can be immediately obtained. The configuration of electrodes of the present invention avoids any difficulties when the increase of discharge current causes the glow extension, so that the method of operating the laser apparatus is flexible.

Therefore, the above-described configuration of discharge portions can achieve stable discharge striking all the time until a large laser light output is produced, and then facilitate the glow extension when the laser apparatus is operated from the standby status up to the status in which the maximum laser light output becomes available, providing flexibility of operation and a large laser output.

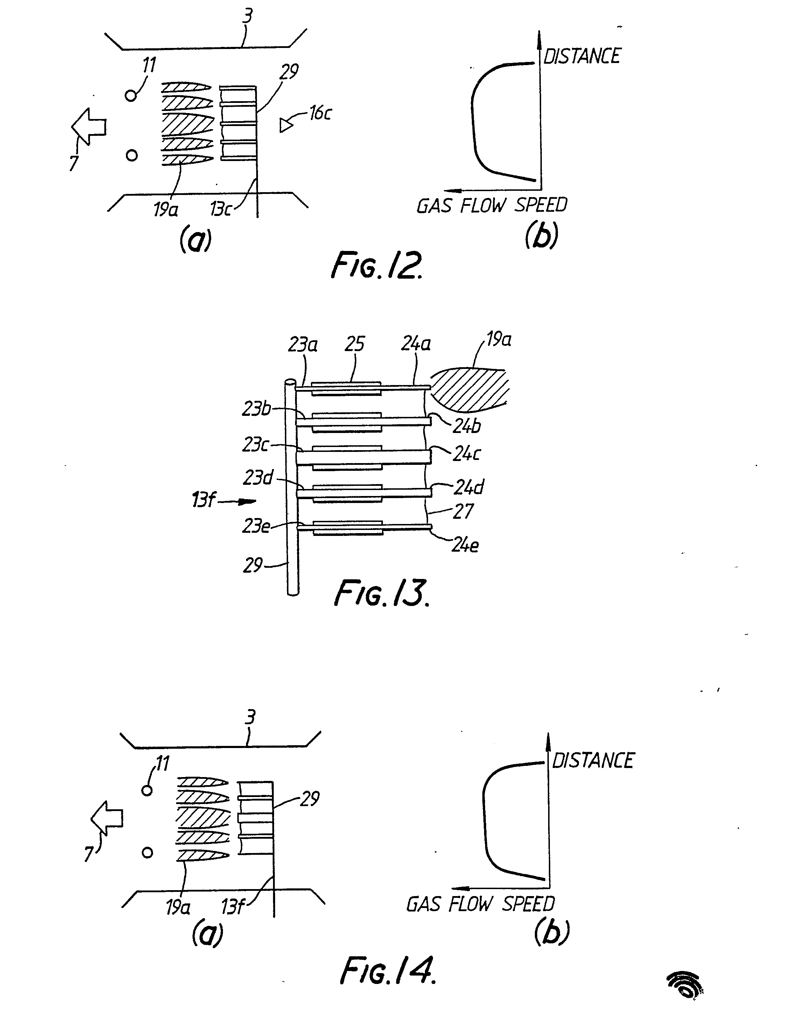

It will also be appreciated that various configurations of the rod-shaped structure of Figures 7 and 8 are possible. For example, a plurality of rod-shaped structures 16A and 16B may be disposed as shown in Figure 11. Alternatively, a rod-shaped structure 16C with a cross-sectional form other than a square, e.g. a triangle can be disposed as shown in Figure 12.

Figure 13 shows another embodiment of the present invention based on the gas laser apparatus with thhe configuration shown in Figure 4. The significant feature of this embodiment is that the needle electrodes are of different diameters. The needle electrode 23c disposed farthest from the inner side walls of the gas duct, i.e. at the centre portion thereof, has the largest diameter. The needle electrodes 23d and 23e disposed nearest the wall have the smallest diameter. Two intermediate needle electrodes 23b and 23c have an intermediate diameter.

The resistance to gas flow presented by the rod-shaped electrodes illustrated in Figure 13 is proportional to the diameter. Consequently, as shown in Figures 14(a) and 14(b), a substantially flat gas flow rate distribution can be achieved across the duct. Therefore, the striking conditions of all the rod-shaped electrodes 11a through 11e which are in a parallel relationship can be rendered more uniform. When flow discharge occurs at the uppermost exposed portion 24a, for example, and the current value thereof increases gradually, the negative glow first occurs on a connection wire 27 so as to extend to the adjacent exposed portion 24b before the exposed portion 24a has become fully covered with the negative glow. When the current value of the glow discharge further increases, the negative glow extends successively to the neighbouring exposed portions 24c, 24d and 24e, so that a uniform glow can be generated over a wide area of the duct.

In general, a larger amount of glow discharge tends to occur at the thicker rod-shaped electrode, so that the discharge density in the centre of the discharging path becomes greater. As a result, the gas pressure at the centre of the discharging path is raised to further improve the uniformity of the flow rate distribution across the housing. This permits the limiting discharge current to be increased by up to 1.5 to 2.0 times the normal value.

CLAIMS:

1.    A gas laser apparatus, comprising:

first and second electrode assemblies;

means for inducing a flow of gas past said electrode assemblies;

means for creating an electric field between said first and second electrode assemblies so as to produce a glow discharge; and

means for producing a laser output from said glow discharge;

at least one of said first and second electrodes including a plurality of electrode units; characterised in that each of said electrode units includes:

a plurality of needle electrodes (23), each having an exposed portion (24) and an insulated portion (23),

an interconnecting support member (29); and

means (27) for electrically interconnecting said exposed portions of said needle electrodes.

2.    A gas laser apparatus according to claim 1, wherein said gas is $CO_2$.

3.    A gas laser apparatus according to claim 1, further comprising:    ·

a plurality of ballast resistors, each being connected to one of said unit electrodes, respectively.

4.    A gas laser apparatus according to claim 1, further comprising means for reducing the·flow velocity at the centre of the gas flow path so as to render the flow velocity across said gas flow path more uniform.

5.    A gas laser apparatus according to claim 4, wherein said flow reducing means includes a rod-shaped structure extending across the gas flow path at the upstream side of said support members, at a position corresponding to the position of a central one of said needle electrodes in each of said electrode units.

6.      A gas laser apparatus according to claim 4, wherein said means for reducing a gas flow includes a ring wind tunnel.

7.      A gas laser apparatus according to claim 4, wherein said needle electrodes disposed farthest from the walls of said ring wind tunnel are larger in diameter than the needle electrodes disposed near the walls, so as to provide relatively greater flow resistance.

0209311

1/5

Fig. 1.
PRIOR ART

Fig. 2.
PRIOR ART

0209311

FIG.3.

FIG.4.

0209311

FIG.5.

FIG.6.

FIG.7.

FIG.8.

FIG. 9.

FIG. 10.

FIG. 11.

FIG.12.

FIG.13.

FIG.14.